# EUROPÄISCHE PATENTSCHRIFT

(11) **EP 0 378 100 B1**
(45) Veröffentlichungstag und Bekanntmachung des Hinweises auf die Patenterteilung: **27.10.1993**
(21) Anmeldenummer: 90100114.9
(22) Anmeldetag: 04.01.1990
(51) Int. Cl.: B01D 46/26

(54) **Trommelfilter**
Filter drum
Filtre à tambour

(30) Priorität: 10.01.1989 CH 67/89
(43) Veröffentlichungstag der Anmeldung: 18.07.1990
(73) Patentinhaber: Wetter, Peter, CH-8623 Wetzikon (CH)
(72) Erfinder: Wetter, Peter, CH-8623 Wetzikon (CH)
(74) Vertreter: Blum, Rudolf Emil Ernst

(56) Entgegenhaltungen:
- EP-A- 0 075 403
- AU-A- 438 371
- CH-A- 201 234
- DE-C- 40 930
- GB-A- 2 736

## Beschreibung

Die Erfindung betrifft einen Trommelfilter, mit einer um eine im wesentlichen horizontalen Achse drehbaren Trommel und mit einer Filterkuchen-Abreinigungseinrichtung, wobei die Trommel und Abreinigungseinrichtung innerhalb eines Filtergehäuses liegen, das mit einem Rohlufteinlass, einem Reinluftauslass und einem Filterkuchenablass versehen ist, wobei der Rohlufteinlass der äusseren Mantelfläche der Trommel und der Reinluftauslass der inneren Mantelfläche der Trommel zugewandt ist, wobei das Filtergehäuse vertikal in eine obenliegende Filterzone und eine darunter liegende Filterkuchen-Absetzzone unterteilt ist, wobei ein Teil der Unterteilfläche als Abreinigungssektor ausgebildet ist und die übrige Unterteilfläche gegen einen Luftdurchtritt abgedichtet ist.

Ein solcher Trommelfilter ist durch die DE-C-40930 bekannt. Der Rohlufteinlass befindet sich unten am Filtergehäuse, so dass von der Rohluft getragene Partikel, ohne auf die äussere Mantelfläche der Trommel zu gelangen, aus der Rohluft ausfallen oder von der äusseren Mantelfläche der Trommel abfallen und in den Rohlufteinlass zurückfallen können. Das gleiche gilt auch für den Trommelfilter gemäss der EP-A-00 75 403. Auch hier können die aus der Rohluft ausgefallenen Partikel oder die von der Trommel ausserhalb des Abreinigungssektors abgelösten Filterkuchenteile sich an Gehäusepartien ablagern und können nur beschwerlich und zeitaufwendig aus dem Trommelfilter entfernt werden. Dasselbe gilt auch für den Trommelfilter gemäss der GB-A-2736, obwohl hier der Rohlufteinlass axial und exzentrisch zur Trommel liegt. Auch bei diesem Trommelfilter können in der Filterzone ausserhalb der Trommel abgelagerte Partikel nicht auf einfache Weise der Filterkuchen-Absetzzone zugeführt werden.

Es ist weiterhin ein Trommelfilter bekannt, bei dem die Filterkuchen-Abreinigungseinrichtung mit Druckluft arbeitet, um den Filterkuchen von der äusseren Mantelfläche der Trommel abzulösen. Der Druckluftstrahl wird hierbei, wie bei der GB-A-2736, vom Inneren der Trommel her gegen die innere Mantelfläche der Trommel geblasen, durchdringt diese und wirft den an der äusseren Mantelfläche der Trommel befindlichen Filterkuchen nach aussen ab. Der durch den Druckluftstoss von der Trommel abgelöste Filterkuchen fällt aber nicht in kompakter Form nach unten, sondern es werden davon Partikel aufgewirbelt, die wieder auf die äussere Mantelfläche der Trommel gelangen. Dafür verantwortlich sind also die Luftströmungen im Filtergehäuse, welche ein kompaktes Absetzen des Filterkuchens in einen dafür vorgesehenen Absetzraum (Kübel, Container, Trog) verhindern.

Es wird die Schaffung eines Trommelfilters bezweckt, mit dem die vorerwähnten Nachteile vermieden werden können, so dass also einerseits verhindert werden kann, dass Partikel des von der Abreinigungseinrichtung abgereinigten Filterkuchens wieder auf die äussere Mantelfläche der Trommel gelangen können, und dass weiterhin in der Filterzone ausserhalb der Trommel abgelagerte Partikel leicht und ebenfalls kompakt, d.h. nicht durch Luftströmungen beeinflusst, dem Trommelfilter entnommen werden können.

Die erfindungsgemässe Ausbildung des Trommelfilters ist dadurch gekennzeichnet, dass der Rohlufteinlass im oberen Bereich der Trommel angeordnet ist, dass die Filterkuchen-Abreinigungseinrichtung eine Luftdüse aufweist, die im Trommelinnern derart angeordnet ist, dass ihre Luftaustrittsöffnung der inneren Mantelfläche der Trommel zugewandt ist, zum Richten der Luftströmung gegen diese innere Mantelfläche im Abreinigungssektor und damit zum Abreinigen der äusseren Mantelfläche vom Filterkuchen im Abreinigungssektor während des Stillstandes der intermittierend drehenden Trommel, und dass zwei Taschen mit je einer Klappe vorhanden sind, und zwar je eine zu beiden Seiten des Abreinigungssektors, an diesen anschliessend.

Die schrittweise drehende Trommel kann immer um den Abreinigungssektor weitergedreht werden; letzterer kann bei Stillstand der Trommel mit einem Druckluftstoss beaufschlagt werden, so dass der Filterkuchen in kompakter Form in einen darunter befindlichen Absetzraum fallen kann. Durch die zwei zu beiden Seiten des Abreinigungssektors vorhandenen Taschen mit Klappen können ebenfalls die in der Filterzone am Gehäuse abgelagerten Partikel in den Absetzraum fallen.

In der Zeichnung ist ein Ausführungsbeispiel des Erfindungsgegenstandes dargestellt. Es zeigen:
Fig. 1 den erfindungsgemässen Trommelfilter in einer Stirnansicht auf die horizontal liegende Trommel, in schematischer Darstellung, und
Fig. 2 ein Detail des unteren Bereichs des Trommelfilters nach Fig. 1, in detaillierter Darstellung.

Der Trommelfilter hat eine um eine horizontale Achse 1 drehbare Trommel 2. Die Trommel 2 soll sich im Beispiel in Richtung eines Pfeiles 3 intermittierend drehen können. Im Inneren der Trommel 2 befindet sich eine Filterkuchen-Abreinigungseinrichtung 4. Die Trommel 2 und die Abreinigungseinrichtung 4 liegen innerhalb eines Filtergehäuses 5, das einen Rohlufteinlass 6, einen Reinluftauslass 7 und einen Filterkuchenablass 8 aufweist, wobei der Rohlufteinlass 6 der äusseren Mantelfläche 9 der Trommel 2 zugewandt ist. Der Reinluftauslass 7 ist der inneren Mantelfläche 10 der Trommel zugewandt, wobei also die Reinluft aus dem Inneren der Trommel 2 koaxial abgeleitet wird.

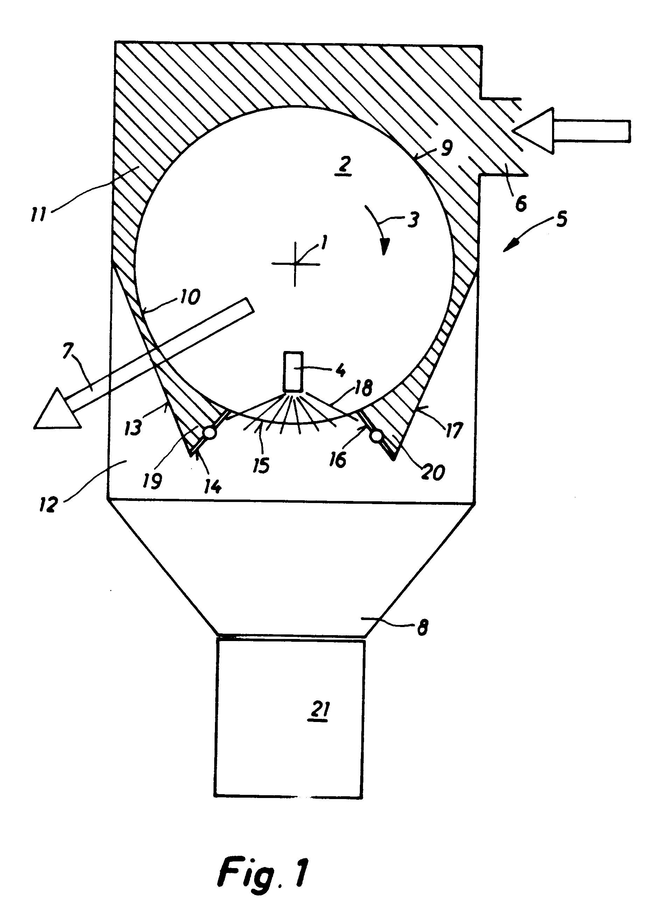

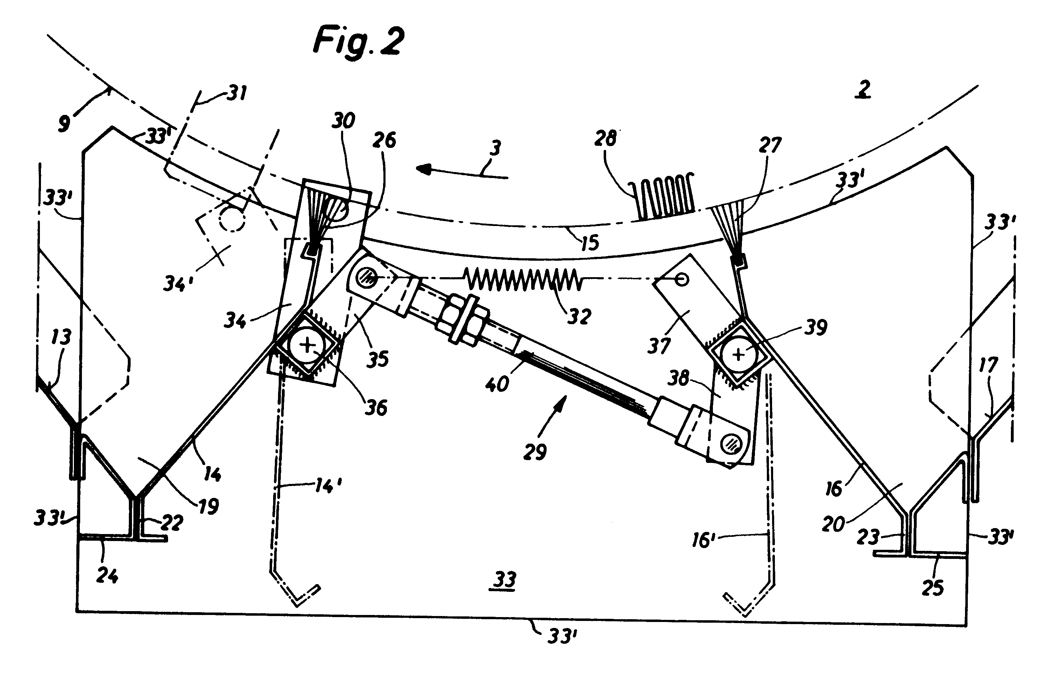

Das Filtergehäuse 5 ist vertikal in eine obenliegende Filterzone 11 und eine darunter liegende Filterkuchen-Absetzzone 12 unterteilt, wobei in Fig. 1 die Filterzone 11 der Deutlichkeit wegen schraffiert dargestellt ist. Zwischen den beiden Zonen 11 und 12 liegt eine Unterteilfläche, die aus den Teilen 13 bis 17 besteht. Der Teil 15 der Unterteilfläche ist als Abreinigungssektor ausgebildet, gegen den also der Druckluftstrahl 18 beim Abreinigen des Filterkuchens gerichtet ist. Die übrige Unterteilfläche, also die Teile 13, 14, 16 und 17, weisen zumindest eine zu öffnende und zu schliessende Klappe zum wahlweisen Oeffnen und damit Verbinden der Filterzone 11 mit der Filterkuchen-Absetzzone 12 auf. Beim gezeigten Beispiel sind die beiden Flächenteile 14 und 16 der Unterteilfläche als Klappen ausgebildet, wobei diese beiden Klappen 14 und 16 in Fig. 2 detailliert dargestellt sind. Die Unterteilfläche 13 bis 17 soll bis auf den Abreinigungssektor 15 möglichst luftdicht ausgebildet sein, das bedeutet, dass die beiden Teile 13 und 17 am oberen Ende am Gehäuse 5 luftdicht angebracht sind, und dass weiterhin die beiden Klappen 14 und 16 mit ihren beiden Klappenenden möglichst luftdicht an der äusseren Mantelfläche 9 der Trommel 2 und anderends am Teil 13 bzw. 17 anliegen sollen, so dass also die Rohluft von der Filterzone 11 durch die äussere und innere Mantelfläche 9, 10 der Trommel 2 hindurchdringen muss.

Aus den Figuren 1 und 2 ist ersichtlich, dass der Abschnitt 13 und die Klappe 14 der Unterteilfläche zusammen eine Tasche 19 der Filterzone 11 bilden, wobei man sagen kann, dass sich die Klappe 14 am Boden dieser Tasche 19 befindet. In gleicher Weise bildet der Abschnitt 17 und die Klappe 16 der Unterteilfläche eine zweite Tasche 20. Die beiden Taschen 19 und 20 mit ihren Klappen 14 und 16 liegen zu beiden Seiten des Abreinigungssektors 15, an diesen anschliessend. Beim gezeigten Beispiel ist jede Tasche 19, 20 V-förmig, wobei bei der Tasche 19 der eine Schenkel der V-Form durch die Klappe 14 und der andere Schenkel der V-Form durch den Abschnitt 13 der Unterteilfläche gebildet wird. Die Tasche 20 ist ebenfalls V-förmig, wobei der eine Schenkel der V-Form durch die Klappe 16 und der andere Schenkel der V-Form durch den Abschnitt 17 der Unterteilfläche gebildet wird. Beide Abschnitte 13 und 17 sind als Rutsche ausgebildet, auf denen also abgelagerter Staub nach unten in die Taschen 19 und 20 rutschen kann. Der Filterkuchenablass 8 des Gehäuses 5 weist ebenfalls schräge Wände auf, ist also trichterförmig ausgebildet, damit der nach unten fallende Filterkuchen oder davon abgelöster Staub in einen darunter befindlichen Absetzraum fallen kann, der im gezeigten Beispiel als Kübel 21 ausgebildet ist.

Die Ausbildung der beiden Klappen 14 und 16 und ihre Betätigung zum Oeffnen oder Schliessen ist aus Fig.2 detailliert ersichtlich. In der mit vollausgezogenen Linien dargestellten Stellung der beiden Klappen 14 und 16 befinden sich diese in der geschlossenen Stellung und liegen mit ihrem unteren Ende 22 bzw. 23 abdichtend an Gehäuseteilen 24 bzw. 25 an. Diese Gehäuseteile 24 und 25 schliessen wiederum abdichtend an die beiden erwähnten Abschnitte 13 und 17 der Unterteilfläche an. Die Klappe 14 trägt an ihrem der Trommel 2 zugewandten Ende eine zum elastischen Anliegen an der äusseren Mantelfläche 9 der Trommel 2 dienende Bürste 26. Die Klappe 16 trägt in gleicher Weise eine Bürste 27. Die Bürsten 26 und 27 begrenzen also den Abreinigungssektor 15 und liegen abdichtend am Filtermaterial 28 der Trommel 2 an, wobei in Fig. 2 nur ein kleiner Bereich dieses Filtermaterials 28 dargestellt ist. In der geöffneten Stellung der beiden Klappen befinden sich diese in ihren Stellungen 14′ und 16′.

Die beiden Klappen 14 und 16 sind durch ein Gestänge 29 miteinander verbunden, zum gleichzeitigen Oeffnen oder Schliessen beider Klappen 14, 16. Das Gestänge 29 hat einen Anschlag 30 für einen Betätigungsnocken 31 der Trommel 2 zum Oeffnen der beiden Klappen 14 und 16 gegen die Kraft einer Feder 32. Die beiden Klappen 14, 16, das Gestänge 29, die Feder 32 und der Anschlag 30 sind in einem Trommelfilter-Einsatz 33 mit der Aussenkontur 33′ zusammengefügt, der Teil der Filterkuchen-Absetzzone 12 ist und in das übrige Filtergehäuse einsetzbar und daraus entfernbar ist.

Die Klappe 14 ist mit einem den Anschlag 30 tragenden Arm 34 und einem weiteren Arm 35 starr verbunden. Diese drei Bauteile 14, 34 und 35 sind um einen Lagerzapfen 36 schwenkbar, der fest im Einsatz 33 sitzt. Die Klappe 16 ist mit einem Arm 37 und einem weiteren Arm 38 starr verbunden, wobei die Bauteile 16, 37 und 38 um einen Lagerzapfen 39 schwenkbar sind, der fest im Einsatz 33 sitzt. Die beiden Arme 35 und 38 sind mittels einer Koppelstange 40 miteinander gelenkig verbunden. Die Feder 32 ist einerends am Arm 37 und anderends am Arm 35 angelenkt. Die beiden Klappen 14 und 16 werden mittels der Zugfeder 32 in ihrer geschlossenen Lage gehalten. Beim intermittierenden Drehen der Trommel 2 gelangt der Betätigungsnocken 31 auf den Anschlag 30 und schwenkt den Arm 34 in die strichpunktierte Stellung 34′. Hierdurch werden beide Klappen 14 und 16 in ihre geöffnete Stellung 14′ und 16′ bewegt. Nachdem der Betätigungsnocken 31 ausser Eingriff mit dem Anschlag 30 gekommen ist, zieht die Feder 32 die beiden Klappen 14 und 16 wieder in ihre geschlossene Stellung. In dieser Stellung der Klappen 14, 16 erfolgt das Filtern der Rohluft.

Zum Abreinigen des Filterkuchens wird der Druckluftstrahl 18 aus der Düse 4 gegen den Abreinigungssektor 15 geblasen, wobei der abgelöste Filterkuchen nach unten in den Kübel 21 fällt. Nunmehr wird die Trommel 2 intermittierend um den Umfangswinkel des Abreinigungssektors 15 in Richtung des Pfeiles 3 weiter gedreht, wobei der Betätigungsnocken 31 die beiden Klappen 14 und 16 öffnet. Hierdurch wird in der Filterzone 11 und besonders in den beiden Taschen 19 und 20 liegender Filterstaub nach unten in den Behälter 21 geleitet, wobei der Filterstaub entlang den beiden als Rutschen dienenden Abschnitten 13 und 17 nach unten rutscht. Die Taschen 19 und 20 sind somit entleert worden. Beim etwas Weiterdrehen der Trommel 2 werden dann wieder die beiden Klappen 14 und 16 geschlossen, und das Filtern der Rohluft wird wieder durchgeführt. Die beiden Klappen 14 und 16 können pro Umdrehung der Filtertrommel 2 ein- oder mehrmals kurz geöffnet und dann wieder geschlossen werden. Das intermittierende Weiterdrehen der Trommel 2 kann z.B. alle paar Minuten erfolgen.

## Patentansprüche

1. Trommelfilter, mit einer um eine im wesentlichen horizontalen Achse (1) drehbaren Trommel (2) und mit einer Filterkuchen-Abreinigungseinrichtung (4, 18), wobei die Trommel (2) und Abreinigungseinrichtung (4,18) innerhalb eines Filtergehäuses (5) liegen, das mit einem Rohlufteinlass (6), einem Reinluftauslass (7) und einem Filterkuchenablass (8) versehen ist, wobei der Rohlufteinlass (6) der äusseren Mantelfläche (9) der Trommel (2) und der Reinluftauslass (7) der inneren Mantelfläche (10) der Trommel (2) zugewandt ist, wobei das Filtergehäuse (5) vertikal in eine obenliegende Filterzone (11) und eine darunter liegende Filterkuchen-Absetzzone (12) unterteilt ist, wobei ein Teil der Unterteilfläche als Abreinigungssektor (15) ausgebildet ist und die übrige Unterteilfläche (13,14,16,17) gegen einen Luftdurchtritt abgedichtet ist, dadurch gekennzeichnet, dass der Rohlufteinlass (6) im oberen Bereich der Trommel (2) angeordnet ist, dass die Filterkuchen-Abreinigungseinrichtung eine Luftdüse (4) aufweist, die im Trommelinnern derart angeordnet ist, dass ihre Luftaustrittsöffnung der inneren Mantelfläche (10) der Trommel (2) zugewandt ist, zum Richten der Luftströmung (18) gegen diese innere Mantelfläche im Abreinigungssektor (15) und damit zum Abreinigen der äusseren Mantelfläche (9) vom Filterkuchen im Abreinigungssektor (15) während des Stillstandes der intermittierend drehenden Trommel (2), und dass zwei Taschen (19,20) mit je einer Klappe (14 bzw. 16) vorhanden sind, und zwar je eine zu beiden Seiten des Abreinigungssektors (15), an diesen anschliessend.

2. Trommelfilter nach Anspruch 1, dadurch gekennzeichnet, dass die Taschen (19,20) V-förmig sind, wobei der eine Schenkel der V-Form durch die Klappe (14 bzw. 16) und der andere Schenkel der V-Form durch eine Rutsche (13 bzw. 17) gebildet ist.

3. Trommelfilter nach Anspruch 1 oder 2, dadurch gekennzeichnet, dass die beiden Klappen (14,16) durch ein Gestänge (29) miteinander verbunden sind, zum gleichzeitigen Oeffnen oder Schliessen beider Klappen (14,16), und dass das Gestänge (29) einen Anschlag (30) für einen Betätigungsnocken (31) der Trommel (2) zum Oeffnen der beiden Klappen (14,16) gegen die Kraft einer Feder (32) aufweist.

4. Trommelfilter nach Anspruch 1, dadurch gekennzeichnet, dass jede Klappe (14,16) an ihrem der Trommel (2) zugewandten Ende eine zum elastischen Anliegen an der äusseren Mantelfläche (9,28) der Trommel (2) dienende Bürste (26 bzw. 27) trägt.

5. Trommelfilter nach Anspruch 3 oder 4, dadurch gekennzeichnet, dass die beiden Klappen (14, 16), das Gestänge (29), die Feder (32) und der Anschlag (30) in einem Trommelfilter-Einsatz (33) zusammengefügt sind, der Teil der Filterkuchen-Absetzzone (12) ist und in das übrige Filtergehäuse einsetzbar und daraus entfernbar ist.

## Claims

1. Rotary drum filter, with a drum (2) rotatable around a substantially horizontal axis (1) and with a filter cake cleaning-off unit (4, 18), whereby the drum (2) and the cleaning-off unit (4, 18) lie inside a filter housing (5) which includes a raw air inlet (6) and a clean air outlet (7) and a filter cake discharge (8), whereby the raw air inlet (6) faces the outer jacket surface (9) of the drum (2) and the clean air outlet (7) faces the inner jacket surface (10) of the drum (2), whereby the filter housing (5) is divided vertically in an upper filter zone (11) and a filter cake settling zone (12) located thereunder, whereby a part of the partition surface is designed as cleaning-off sector (15) and the rest of the partition surface (13, 14, 16, 17) is sealed against a through-flow of air, characterized in that the raw air inlet (6) is arranged at the upper area of the drum (2), that the filter cake cleaning-off unit comprises an air jet nozzle (4) located in such a manner in the inside of the drum that its air exit opening faces the inner jacket surface (10) of the drum (2), for a directing of the air flow (18) against this inner jacket surface in the cleaning-off sector (15) and therewith for the cleaning off of the filter cake in the cleaning-off sector (15) from the outer jacket surface (9) during the standstill of the intermittently rotating drum (2), and that two pockets (19, 20) having each a flap (14 and 16, respectively,) are present, and specifically one each at both sides of the cleaning-off sector, following same.

2. Rotary drum filter according to claim 1, characterized in that the pockets (19, 20) have a V-shape, whereby the one leg of the V-shape is formed by the flap (14 and 16, respectively,) and the other leg of the V-form by a chute (13 and 17, respectively,).

3. Rotary drum filter according to claim 1 or 2, characterized in that the two flaps (14, 16) are interconnected by a linkage (29) for a simultaneous opening or closing of both flaps (14, 16) and that the linkage (29) includes an abutment (30) for an operating cam (31) of the drum (2) for an opening of both flaps (14, 16) against the force of a spring (32).

4. Rotary drum filter according to claim 1, characterized in that each flap (14, 16) carries at its end facing the drum (2) a brush (26 and 27, respectively,) serving for an elastic abutting at the outer jacket surface (9, 28) of the drum (2).

5. Rotary drum filter according to claim 3 or 4, characterized in that the two flaps (14, 16), the linkage (29), the spring (32) and the abutment (30) are assembled in a drum filter-insert (33), which is part of the filter cake-settling zone (12) and is insertable into and removable out of the rest of the filter housing.

## Revendications

1. Filtre à tambour comportant un tambour (2) pouvant tourner autour d'un axe (1) en substance horizontal et un dispositif de nettoyage (4, 18) pour éliminer le gâteau de filtration, le tambour (2) et le dispositif de nettoyage (4, 18) étant installés à l'intérieur d'un boîtier de filtre (5) qui est pourvu d'une entrée d'air à filtrer (6), d'une sortie d'air filtré (7) et d'une sortie (8) pour le gâteau de filtration, l'entrée d'air à filtrer (6) s'ouvrant vers la surface périphérique externe (9) du tambour (2) et la sortie d'air filtré (7) s'ouvrant vers la surface périphérique interne (10) du tambour (2), le boîtier de filtre (5) étant subdivisé verticalement en une zone de filtration supérieure (11) et une zone de formation du gâteau de filtration (12), une partie de la surface de subdivision ayant la forme d'un secteur de nettoyage (15) et le reste de la surface de subdivision (13, 14, 16, 17) étant rendu étanche de manière à s'opposer à tout passage de l'air, caractérisé en ce que l'entrée d'air à filtrer (6) est installée dans la zone supérieure du tambour (2), que le dispositif d'élimination du gâteau de filtration comporte un ajutage d'air (4) qui est installé à l'intérieur du tambour de telle sorte que son orifice de sortie d'air soit dirigé vers la surface périphérique interne (10) du tambour (2), afin de diriger le flux d'air (18) vers cette surface périphérique interne, dans le secteur de nettoyage (15), et ainsi de nettoyer la surface périphérique externe (9) en la débarrassant du gâteau de filtration dans le secteur de nettoyage (15) pendant que le tambour (2) qui tourne par intermittence est immobile, et que deux poches (19, 20) comportant chacune un clapet (14, 16) sont présentes, respectivement de part et d'autre du secteur de nettoyage (15), tout contre celui-ci.

2. Filtre à tambour suivant la revendication 1, caractérisé en ce que les poches (19, 20) sont en forme de V, la première aile du V étant formée par le clapet (14, 16) et l'autre, par une goulotte (13, 17).

3. Filtre à tambour suivant la revendication 1 ou 2, caractérisé en ce que les deux clapets (14, 16) sont reliés l'un à l'autre par une tringlerie (29) afin de permettre l'ouverture ou la fermeture simultanée des deux clapets (14, 16) et la tringlerie (29) présente une butée (30) pour une came d'actionnement (31) du tambour (2) en vue d'ouvrir les deux clapets (14, 16) à l'encontre de la sollicitation d'un ressort (32).

4. Filtre à tambour, caractérisé en ce que chaque clapet (14, 16) porte, à son extrémité tournée vers le tambour (2), une brosse (26, 27) destinée à être appliquée élastiquement contre la surface périphérique externe (9, 28) du tambour (2).

5. Filtre à tambour suivant la revendication 3 ou 4, caractérisé en ce les deux clapets (14, 16), la tringlerie (29), le ressort (32) et la butée (30) sont regroupés dans un élément de filtre à tambour (33) qui fait partie de la zone de formation du gâteau de filtration (12) et peut être installé dans le reste du boîtier de filtre et être retiré de celui-ci.
